(19)

Europäisches
Patentamt

European
Patent Office

Office européen
des brevets

(11) **EP 2 255 947 A1**

(12) **EUROPÄISCHE PATENTANMELDUNG**

(43) Veröffentlichungstag:
**01.12.2010  Patentblatt 2010/48**

(21) Anmeldenummer: **09007266.1**

(22) Anmeldetag: **30.05.2009**

(51) Int Cl.:
*B29C 47/76* (2006.01)          *B29C 47/36* (2006.01)
*B29B 7/84* (2006.01)          *B29C 47/50* (2006.01)
*B01D 1/06* (2006.01)

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK TR**
Benannte Erstreckungsstaaten:
**AL BA RS**

(71) Anmelder: **Bayer MaterialScience AG
51368 Leverkusen (DE)**

(72) Erfinder:
• **Liesenfelder, Ulrich
51469 Bergisch Gladbach (DE)**
• **König, Thomas, Dr.
51375 Leverkusen (DE)**
• **Kohlgrüber, Klemens, Dr.
51515 Kürten (DE)**

(54)  **Vorrichtung und Verfahren zum Mischen von Polymerschmelzen mit Additiven**

(57)  Die Erfindung betrifft eine Vorrichtung und ein Verfahren zum effizienten Mischen von Polymerschmelzen mit Additiven, die verbesserte optische Eigenschaften, insbesondere Yellowness Index (YI) aufweisen. Desweiteren erlauben die Vorrichtung und das Verfahren eine Additivierung mit gleichzeitigem Entgasen von lösungsmittelhaltigen Polycarbonatschmelzen, insbesondere aus aromatische Chlorkohlenwasserstoffe enthaltenden Polycarbonatschmelzen. Durch Anwendung des erfindungsgemäßen Verfahrens werden Polycarbonate mit niedrigen Restwerten an flüchtigen Bestandteilen aus lösungsmittelhaltigen Polymerschmelzen erzeugt, die verbesserte optische Eigenschaften, insbesondere Yellowness Index (YI) aufweisen. Die Vermischung der Polymerschmelze mit Additiven und/oder Farbmitteln erfolgt erfindungsgemäß nach der Entgasung in der Druckaufbauzone des Extruders und/oder in einem nachgeschalteten Statikmischer (16), wobei vorzugsweise eine Zahnradpumpe (15) zum Druckaufbau zwischen Extruder und Statikmischer geschaltet wird.

Fig. 1

EP 2 255 947 A1

**Beschreibung**

Die Erfindung betrifft eine Vorrichtung und ein Verfahren zum effizienten Mischen von Polymerschmelzen mit Additiven, die verbesserte optische Eigenschaften, insbesondere Yellowness Index (YI) aufweisen. Desweiteren erlauben die Vorrichtung und das Verfahren eine Additivierung mit gleichzeitigem Entgasen von lösungsmittelhaltigen Polycarbonatschmelzen, insbesondere aus aromatische Chlorkohlenwasserstoffe enthaltenden Polycarbonatschmelzen. Durch Anwendung des erfindungsgemäßen Verfahrens werden Polycarbonate mit niedrigen Restwerten an flüchtigen Bestandteilen aus lösungsmittelhaltigen Polymerschmelzen erzeugt, die verbesserte optische Eigenschaften, insbesondere Yellowness Index (YI) aufweisen. Die Vermischung der Polymerschmelze mit Additiven und/oder Farbmitteln erfolgt erfindungsgemäß nach der Entgasung in der Druckaufbauzone des Extruders und/oder in einem nachgeschalteten Statikmischer, wobei vorzugsweise eine Zahnradpumpe zum Druckaufbau zwischen Extruder und Statikmischer geschaltet wird.

Im bekannten Grenzflächenverfahren zur Herstellung von Polycarbonaten werden Lösungsmittel wie aromatische Chlorkohlenwasserstoffe, insbesondere Dichlormethan eingesetzt, deren Restgehalte im Endprodukt unerwünscht sind, da sie im Polycarbonat stören. Um diese flüchtigen Bestandteile zu entfernen muss der Entgasungsextruder nach den aus dem Stand der Technik bekannten Verfahren bei höheren Temperaturen betrieben werden, wodurch thermische Schädigungen entstehen, was den Nachteil verschlechterter optischer Eigenschaften aufweist.

Eine effiziente Aufkonzentrierung der Polycarbonatlösung und Ausdampfung der Restgehalte an Lösungsmittel bei niedrigen Temperaturen sowie einer effizienten Vermischung der Additive ist deswegen von höchster Bedeutung um Polycarbonate mit verbesserten optischen Eigenschaften zu erlangen.

Die Ausdampfung der Restgehalte an Lösungsmitteln erfolgt bevorzugt auf Entgasungsextrudern, beispielsweise nach EP 1 165 302. Die Zugabe der Additive und Zuschlagstoffe erfolgt nach der Entgasung, weil die Additive und Zuschlagstoffe teilweise selbst flüchtige Substanzen sind. Ein Verfahren zur Einmischung der Additive ist in DE 103 56 821 beschrieben. Die Additive und Zuschlagstoffe werden hier in der Druckaufbauzone des Extruders vor der Strangabspinnung zugegeben und ohne speziell dafür vorgesehene Mischelemente eingemischt. Nachteilig an dieser Vorgehensweise ist, dass die erzielbare Mischgüte in vielen Fällen unzureichend ist. Insbesondere beim Einsatz von Schneckenelementen, die besonders effizient im Druckaufbau sind, d.h. die mit einer geringen Temperaturerhöhung und damit mit einer geringen Produktschädigung den Extrusionsdruck aufbringen können, genügt die Mischwirkung keinen besonderen Ansprüchen.

In der technischen Praxis ist es durchaus üblich, zum Vermischen von Polymeren mit Additiven und Zuschlagstoffen Statikmischer einzusetzen. Es existiert jedoch das Vorurteil, dass die hohen Produkttemperaturen, die in Ausdampfextrudern erreicht werden, den Einsatz von nachgeschalteten Statikmischern verbieten, weil eine thermische Schädigung des Polymeren eintritt. So wird beispielsweise in DE 103 56 821 ausgeführt. Hier wird offenbart, dass die Verwendung von Statikmischern ungünstig ist, da sie als einer Maschine nachgeschaltetes Organ bei technisch noch vertretbarem Druckverlust Verweilzeiten haben, die zu Schädigungen am Produkt führen. Ihr Druckverlust muss entweder von dem vorgeschalteten Extruder mit niedrigem Wirkungsgrad und damit Temperaturerhöhung und Produktschädigung oder von einem zusätzlichen Aggregat zum Druckaufbau, beispielsweise einer Zahnradpumpe, mit zusätzlichen Kosten und zusätzlicher Verweilzeit und damit Produktschädigung aufgebracht werden.

Das Verfahren zur Polycarbonatsynthese nach dem Phasengrenzflächenverfahren ist mannigfaltig in der Literatur beschrieben, so unter anderem bei Schnell, "Chemistry and Physics of Polycarbonates", Polymer Reviews, Volume 9, Interscience Publishers, New York, London, Sydney 1964, Seite 33-70.

Bei dem Phasengrenzflächenverfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches eine zweite Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert. Die organische Phase wird schließlich abgetrennt und in einem mehrstufigen Verfahren gewaschen, um Reste von Natrium und Katalysator zu entfernen. Typischerweise enthält die organische Phase nach der Reaktion 10-20 Gew.-% Polycarbonat.

Das Polycarbonat muss anschließend aus der organischen Phase isoliert werden. Die gängigen Verfahren zur Konzentrierung der Polycarbonatlösung und zur Isolierung des Polycarbonats sind in der Patentliteratur und in Lehrbüchern beschrieben und dem Fachmann geläufig. Die Isolierung des Polycarbonats aus der Lösung wird bevorzugt durch Verdampfen des Lösungsmittels mittels Temperatur oder Vakuum durchgeführt. Dieses Verfahren erfordert, um nach dem Verdampfen des Lösungsmittels direkt die Schmelzephase zu erhalten, entweder die Durchführung des Verfahrens bei hohen Drücken oder den Einsatz eines hoch siedenden (>100°C) Lösungsmittels, beispielsweise Chlorbenzol. Um die Löslichkeit des Polymers im Lösungsmittel während der Reaktion zu verbessern, wird auch ein Gemisch aus einem oder mehreren hoch siedenden Lösungsmitteln und dem niedrig siedenden Dichlormethan eingesetzt. Typischerweise ist das Gewichtsverhältnis von Dichlormethan zu dem hoch siedenden Lösungsmittel etwa 1:1.

Eine weitere Möglichkeit liegt in der Eindüsung eines erhitzten Gases, vor allem Wasserdampf, zum Austreiben der flüchtigen Bestandteile. Dabei wird die Polycarbonatlösung mit dem Trägergas versprüht, und Polycarbonat fällt als Feststoff an, vor allem als wasserfeuchte Suspension. Andere Isolierungsmethoden sind die Kristallisation und Fällung sowie das Ausheizen der Reste des Lösungsmittels in der festen Phase. Letzteres Verfahren erfordert den Einsatz von Dichlormethan als Lösungsmittel, wobei Restgehalte an flüchtigem Lösungsmittel von etwa 2 ppm Dichlormethan erreicht werden können.

Restgehalte an Dichlormethan stören allerdings im Polycarbonat besonders, da Dichlormethan bekanntermaßen beim Verarbeitungsprozess mit Restfeuchte zusammen Salzsäure abspaltet und so zu Verfärbungen des Polycarbonats und zu Korrosion an Werkzeugen führen kann. Dichlormethan kann bei erhöhten Temperaturen auch im Aufarbeitungsprozess zu Qualitätseinbußen wie Verfärbungen und Gelbildung führen.

Bei den bekannten Verfahren zur Verdampfung oder auch Flashverdampfung werden Polycarbonatlösungen wiederholt unter leichtem Überdruck auf Temperaturen oberhalb des Siedepunktes erhitzt und diese überhitzten Lösungen anschließend in einen Behälter entspannt, wobei in dem Behälter ein niedrigerer Druck herrscht, als dem Dampfdruck der Lösung entspricht. Eine wiederholte Anwendung des Verfahrens ist im Allgemeinen günstig, da die Konzentration an Polycarbonat in der Lösung nach der Reaktion relativ niedrig ist und durch die Wiederholung des Verfahrens eine starke Überhitzung vermieden werden kann. Gängige Verfahren für die apparative Eindampfung von Polycarbonatlösungen sind dem Fachmann geläufig. Beispielsweise kann die überhitzte Lösung in ein beheiztes Wendelrohr entspannt werden, welches in einen Abscheider mündet.

Oberhalb einer bestimmten Konzentration an Polycarbonat (etwa 60 Gew.-%) wird die Eindampfung durch Flashverdampfung durch die hohen Viskositäten erschwert. Die Eindampfung bis zu etwa 60% wird im Weiteren als Voreindampfung bezeichnet. Im Allgemeinen ist es günstig, das restliche Lösungsmittel mit anderen Verfahren, Apparaten und Maschinen zu entfernen. Dies können z.B. Ausdampfextruder oder vertikale Rohrverdampfer sein. Als letzte Stufe können auch Strang- oder Schaumverdampfer eingesetzt werden, um besonders niedrige Restgehalte zu erreichen.

Beim Eindampfen von Polycarbonat werden nach dem Stand der Technik meist hohe Apparate-Temperaturen und lange Verweilzeiten der Schmelze in den Apparaten angewendet, bei denen zwar eine hinreichende Restentgasung der Polycarbonatschmelze von den flüchtigen Bestandteilen erfolgt, allerdings eine Schädigung des so hergestellten Polycarbonats eintritt. Diese Produktschädigungen sind meist eine direkte Folge von zu hoher Temperatur-Belastung bei zu langer Verweilzeit der Polymerschmelze in den Entgasungsapparaten. Dabei treten Nebenreaktionen am Polycarbonat auf, die eine Verschlechterung der optischen Eigenschaften bewirken, insbesondere die Bildung von Fehlstrukturen, die in den aus solchem Polycarbonat hergestellten Formkörpern meist erst im UV-Licht sichtbar werden. Beispiele für solche Fehlstrukturen sind feinste Partikel und Gelkörper. Bei der Verarbeitung von Polycarbonat zu optischen Datenträgern, wie z.B. CDs oder DVDs, bewirken solche Fehlstrukturen im Endprodukt eine erhebliche Qualitätseinbuße, die nicht mehr tolerabel ist und vermieden werden muss.

Aufkonzentrierungen von Chlorbenzol-haltigen Polycarbonatlösungen sind in EP-A 1 265 944 und EP-A 1 113 848 beschrieben, deren Beispiele die Herstellung von 65 Gew.-%igen Polycarbonatlösungen beschreiben. Derartige Polycarbonatlösungen können zur Restentgasung des Polycarbonats, im Gegensatz zu den dort beschriebenen nachfolgenden Verfahrensschritten, auch in Ausdampfextrudern weiter eingedampft werden. Solche Restentgasungen von Polycarbonatlösungen mit Hilfe von Ausdampfextrudern werden in DE 29 08 352 und EP 1 165 302 beschrieben. In diesen beiden Extruder-Verfahren wird am Extrudereintritt eine sogenannte Rückwärtsentgasung beschrieben. Dabei wird eine gegebenenfalls vorgeheizte Polymerlösung in einen Zweischneckenextruder eingebracht und schäumt dort auf. Die Gase werden dann durch die Gänge des Zweischneckenextruders rückwärts zu einem Entgasungsdom abgeführt. Allgemein ist eine derartige Rückwärtsentgasung Stand der Technik und z.B. in dem Lehrbuch "Der gleichläufige Doppelschneckenextruder", Klemens Kohlgrüber, Carl Hanser Verlag, ISBN 978-3-446-41252-1, auf den Seiten 193-195 beschrieben. Ein Nachteil der Rückwärtsentgasung ist eine Limitierung in der Menge an abgedampftem Lösungsmittel, weil die Schneckenkanäle relativ eng sind und dadurch hohe Gasgeschwindigkeiten erreicht werden, die zu Mitriss von Produkt in den rückwärts gelegenen Entgasungsdom führen kann. So muss ein relativ hoher Anteil an Restlösungsmittel in den weiteren Stufen des Extruders ausgedampft werden, wenn 65- bis 75 Gew.-%ige Polycarbonatlösungen in diese Apparate eingeführt werden und bis auf wenige ppm bezogen auf die gesamte Polycarbonatmasse Restlösungsmittelgehalte im Polycarbonat eingedampft werden sollen. Dabei können thermische Schädigungen des Polycarbonats auftreten, wie z.B. Vergilbungen, Bildung von unlöslichen Bestandteilen, Stippen, Spaltung der Polymerketten, Bildung von Restmonomeren und anderen niedermolekularen Bestandteilen etc. Auch ist nachteilig, wenn direkt in einen Extruder eine Polycarbonatlösung mit Restgehalten an Lösungsmittel, wie Dichlormethan, eingespeist wird, da die dem Fachmann wohl bekannte Überhitzung der Lösung an den Kämmen der Schnecke in Gegenwart von beispielsweise Dichlormethan zu lokaler Produktschädigung und damit zu Verfärbung des Gesamtproduktes führt.

Weiterhin offenbart EP-A 027 700 die Kombination eines Flash-Verdampfers mit einem Ausdampfextruder zur Aufkonzentrierung der Lösungen von Olefinpolymerisaten, wobei vor der Flash-Stufe Wasserdampf als Schleppmittel in den Polymerschmelzestrom eingedüst wird. Im Fall von Polycarbonatschmelzen kann Wasser bei erhöhter Temperatur zu Polymerabbau durch Hydrolyse führen. Daher ist ein solches Verfahren für die Restentgasung von Polycarbonatschmelzen nicht empfehlenswert. Weiterhin wird dort beschrieben, dass das Produkt in dem Entgasungsbehälter im Boden der Apparatur "eingesammelt" wird, das in Kontakt mit dem Boden des Entgasungsbehälters dem Extruder zugeführt wird, was zu erhöhten Verweilzeiten des Polymers und damit zu thermischer Schädigung führt.

JP 05017516 beschreibt die Verwendung eines direkt auf dem Ausdampfextruder positionierten Rohrverdampfers zur Restentgasung von Polymerlösungen. Der Nachteil der hier beschriebenen Verfahrensführung besteht darin, dass die im Rohrverdampfer entstehenden Brüden nicht dort abgeführt werden, sondern über die Entgasungsöffnungen des Ausdampfextruders, u.a. auch über eine Rückwärtsentgasung, ausgetragen werden. Damit leidet dieses Verfahren unter den gleichen Limitierungen durch hohe Gasgeschwindigkeiten in den engen Schneckenkanälen wie die Verfahren zur reinen Rückwärtsentgasung. Dadurch resultieren erhöhte Scherkräfte im Extruder, was unvermeidlich schädigende Temperaturerhöhungen zu Folge hat.

EP-A 1 510 530 schildert ein Verfahren, bei dem eine in einem Wärmetauscher unter einer Druckhaltung überhitzte Polymerlösung einem Ausdampfextruder zugeführt wird. Die entstehenden Gase werden dann durch Vorwärts- und Rückwärtsentgasung aus dem Extruder entfernt. Damit leidet dieses Verfahren unter den gleichen Limitierungen durch hohe Gasgeschwindigkeiten in den engen Schneckenkanälen wie die Verfahren zur Rückwärtsentgasung sowie an der lokalen Überhitzung an den Schneckenkämmen in Gegenwart von Dichlormethan. Wie an den Beispielen 60 bis 65 in EP-A 1 510 530 für Polycarbonatlösungen dargestellt wurde, liegen die Restlösungsmittelgehalte z.T. deutlich über 1000 ppm, was für die meisten Anwendungen nicht tolerabel ist.

Es bestand daher die Aufgabe, eine Vorrichtung und ein Verfahren zur Additivierung und gegebenenfalls Restentgasung von Polymerschmelzen, insbesondere von Polycarbonatschmelzen bereitzustellen, bei dem die Bildung derartiger unerwünschter Veränderungen im Polycarbonat vermieden wird. Es war insbesondere Aufgabe der Erfindung, das bestehende Additivierungs- und Entgasungsverfahren für Polycarbonatschmelzen so zu verbessern, dass hohe Polycarbonatschmelzetemperaturen bei längeren Verweilzeiten vermieden und dennoch geringe Rest-Lösungsmittelgehalte im fertigen Polycarbonat erreicht werden.

Die Aufgabe wird überraschenderweise dadurch gelöst, dass Polycarbonatlösungen, die aromatische Chlor-Kohlenwasserstoffe wie z.B. Chlorbenzol als Lösungsmittel enthalten, für den Verfahrensschritt der Restentgasung einer Apparate-Kombination aus Fallrohrverdampfer, Ausdampfextruder sowie nachgeschaltetem Statikmischer zugeführt werden; dabei wird der Fallrohrverdampfer als erste Verfahrensstufe von der Polycarbonatschmelze durchlaufen, der Ausdampfextruder als zweite nachgeschaltete Verfahrensstufe und der Statikmischer als dritte nachgeschaltete Verfahrensstufe.

Bevorzugt wird diese Apparate-Kombination so konstruiert, dass der Konus des Fallrohrverdampfers senkrecht auf einem der ersten Gehäuse des Ausdampfextruders angeordnet ist und dass bevorzugt mehr als ein Drittel und besonders bevorzugt mehr als die Hälfte als Eintrittsöffnung für die aus dem Fallrohrverdampfer herabfallende Schmelze zur Verfügung steht.

Überraschend wurde gefunden, dass nur eine geringe Produktschädigung eintritt, wenn man in der Druckaufbauzone des Extruders eine Vormischung vornimmt und im nachgeschalteten Statikmischer die Resthomogenisierung durchführt. In einer besonders bevorzugten Ausführungsform wird zwischen den Extruder und den Statikmischer eine Zahnradpumpe geschaltet, die den Extruder zu einem großen Teil vom Druckaufbau für die Extrusion und die Überwindung des Statikmischers entlastet. Die Zahnradpumpe leistet den Druckaufbau mit einem wesentlich höheren Wirkungsgrad als der Extruder und erzeugt somit weniger Temperaturerhöhung und thermische Belastung des Polymeren. Die Vormischung im Extruder und das hohe Druckaufbauvermögen der Zahnradpumpe erlauben zudem eine sehr kompakte Auslegung des Statikmischers. Des Weiteren kann die Druckaufbauzone des Extruders aufgrund des geringeren Druckaufbaus verkürzt werden, so dass die zusätzliche Verweilzeit, die durch den Einbau der Zahnradpumpe und des Statikmischers bedingt ist, teilweise kompensiert wird. Gegenüber der Vorgehensweise nach DE 103 56 821, beispielsweise, erhält man somit eine verbesserte Mischwirkung bei einer verringerten Extrusionstemperatur und bei einer vergleichbaren Verweilzeit.

Beispiele für Additive und Zuschlagstoffe sind Stabilisatoren, die den thermischen oder oxidativen Abbau des Polymeren verhindern sollen, Verarbeitungshilfsmittel wie Entformungsmittel, Fließhilfsmittel oder Antistatika, Mittel zur Verbesserung der mechanischen Eigenschaften wie Glasfasern oder Schlagzähmodifikatoren, Flammschutzmittel oder Farbmittel.

In einer weiteren bevorzugten Ausführungsform wird in die Druckaufbauzone des Extruders ein Mischelement integriert, was eine weitere Verkürzung des Statikmischers erlaubt. Eine Übersicht über Mischelemente nach dem Stand der Technik gibt "Der gleichläufige Doppelschneckenextruder", Klemens Kohlgrüber, Carl Hanser Verlag, ISBN 978-3-446-41252-1 auf Seite 242ff. In einer bevorzugten Ausführung kommen Schnecken-mischelemente (SME) zum Einsatz.

Als Statikmischer kommen bevorzugt solche Mischer zum Einsatz, die zur Erzielung der gewünschten Mischgüte ein geringes inneres Volumen benötigen. Ein Beispiel für einen solchen Mischer wird in DE 2532355 offenbart.

Gegenstand der Erfindung ist somit eine Vorrichtung und ein Verfahren zum Mischen von Polymerschmelzen mit Additiven und gegebenenfalls zur Entfernung flüchtiger Bestandteile aus lösungsmittelhaltigen Polymerschmelzen, insbesondere aus aromatische Chlorkohlenwasserstoffe enthaltenden Polycarbonatschmelzen mit Hilfe einer Apparate-Kombination aus einem Ausdampfextruder und einem Statikmischer.

In einer bevorzugten Ausführungsform wird dieser Apparate-Kombination ein beheizbarer Fallrohrverdampfer vorangestellt.

In einer besonders bevorzugten Ausführungsform wird diese Apparate-Kombination so ausgelegt, dass die Abführung der im Fallrohrverdampfer entstehenden lösungsmittel-haltigen Brüden direkt aus dem Gehäuse des Fallrohrverdampfers über sogenannte Brüdenleitungen erfolgt.

In einer weiteren besonders bevorzugten Ausführungsform dieser Apparate-Kombination ist eine Eindüsung und Vermischung von inerten Komponenten wie beispielsweise Stickstoff, Argon, Kohlendioxid, Wasser, Methan oder Helium oder eine Mischung aus einer oder mehrerer dieser Komponenten, bevorzugt Stickstoff als Schleppmittel in den Polymerschmelzestrom vor dem Fallrohrverdampfer.

In einer weiteren besonders bevorzugten Ausführungsform dieser Apparate-Kombination erfolgt die Eindüsung von Inertgas als Schleppmittel an einem oder mehreren Gehäusen des Ausdampfextruders.

Durch die dem Extruder vorgelagerte Eindampfung in dem Fallrohrverdampfer kann die Drehzahl des Extruders gesenkt und so die Temperatur, und somit die Produktschädigung, verringert werden.

Der erfindungsgemäß verwendete Fallrohrverdampfer enthält wenigstens einen beheizbaren Rohrbündelwärmetauscher, der senkrecht auf einem Abscheider angeordnet und mit diesem unmittelbar verbunden ist. Die Rohre des Rohrbündelwärmetauschers, die mit Polycarbonatschmelze beaufschlagt sind, münden frei in diesen Abscheider, der seinerseits über den unteren Konus frei und unabsperrbar direkt mit einem Extrudergehäuse des Ausdampfextruders verbunden ist, sodass die aus dem Rohrbündelwärmetauscher austretende aufkonzentrierte Polycarbonatschmelze unmittelbar in den Ausdampfextruder gelangen kann.

Der Abscheider verfügt in einer besonders bevorzugten Ausführungsform im oberen Bereich über mindestens eine Austrittsöffnung zur Abführung gasförmiger Brüden, über mindestens ein Abscheidegefäß, auf dessen Boden sich vom Brüdenstrom mitgerissene Schmelzepartikel abscheiden können, und ist mit einer Brüden-Kondensationseinrichtung verbunden. Hinter der Kondensationseinrichtung kann eine Anlage zur Vakuumerzeugung mit Druckregelung vorhanden sein.

In einer bevorzugten Ausführungsform besteht der Fallrohrverdampfer aus einem Rohrbündel-Wärmetauscher. Die Polycarbonatlösung wird durch eine Eintrittsöffnung am oberen Ende des Fallrohrverdampfers eingeleitet und über einen Verteilerboden einer Vielzahl von Rohren zugeführt, die von außen beheizt werden. Bevorzugt erfolgt die Beheizung über kondensierenden Wasserdampf, einen kondensierenden organischen Wärmeträger oder über einen flüssigen organischen Wärmeträger. Über die Innenoberfläche der Rohre wird die Wärmeenergie zur Verdampfung von Lösungsmittel in die Polycarbonatschmelze eingetragen. Dabei verdampfen Lösungsmittelanteile und bilden ein zweiphasiges Gas-Flüssig-Gemisch aus. Im Gegensatz zum Stand der Technik wird hier gezielt eine Überhitzung der Polymerschmelze vermieden. Das entweichende dampfförmige Lösungsmittel bewirkt eine ständige Durchmischung und Oberflächenerneuerung der Polycarbonatschmelze, was deren effizientere Aufkonzentrierung bewirkt. Es wird auf diese Weise dem Ausdampfextruder eine deutlich höher konzentrierte und kältere Polycarbonatschmelze zugeführt, so dass sowohl die Energie-Eintragung als auch die Verweilzeit der Polycarbonatschmelze im Extruder geringer sein können, um die gleiche oder gar höhere Restentgasung der Polycarbonatschmelze zu bewirken. Diese Schmelze wird dadurch weniger thermisch belastet, so dass die Bildung von unerwünschten Nebenprodukten deutlich gemindert ist. Durch die getrennte Abführung der Brüden aus dem Fallrohrverdampfer wird zudem die Leistungsbilanz des Ausdampfextruders verbessert.

Die Polycarbonat-Lösung enthält bevorzugt 65 - 95 Gew.-% Polycarbonat, bezogen auf das Gesamtgewicht der Polycarbonat-Lösung.

Durch die in einer bevorzugten Ausführungsform zusätzliche Einführung von Schleppgasen vor dem Fallrohr-Verdampfer und/oder im Ausdampfextruder wird der Grad der Restentgasung der Polycarbonatschmelze auf schonende Weise weiter verbessert. Das besonders leichtflüchtige Dichlormethan wird auf diese Weise fast vollständig abgetrennt, bevor es in Kontakt mit den Wellen des Extruders kommt, wodurch der schädliche Einfluss des Dichlormethans auf die Farbe vermieden wird.

In einer speziellen Ausführungsform des erfindungsgemäßen Polycarbonat-Restentgasungsverfahrens wird der oben beschriebenen Kombination aus Fallrohrverdampfer und Ausdampfextruder ein weiterer Fallrohrverdampfer vorangestellt, in den eine 55- bis 80 Gew-%-ige Polycarbonat-Lösung in einem ersten Verfahrensschritt eingeleitet und vorkonzentriert wird. Die so auf 70 bis 95 Gew.%, bevorzugt auf 80 bis 90 Gew.% Polycarbonat vorkonzentrierte Lösung wird anschließend dem oben beschriebenen zweiten Fallrohrverdampfer, der unmittelbar mit dem Ausdampfextruder verbunden ist, zugeführt. Auf diese Weise gelingt es, die Zufuhr der zur Verdampfung der flüchtigen Bestandteile in der Polycarbonatlösung erforderliche Wärmemenge auf mehrere Apparate zu verteilen und die Apparate-Temperaturen so zu wählen, dass Überhitzungen der Polycarbonatschmelze sowie die damit verbundenen Nebenreaktionen vermieden werden können.

In einer besonders bevorzugten Ausführungsform weist der Fallrohrverdampfer bevorzugt einen Rohrbündelwärmetauscher auf, mit vertikalen, beheizten Rohren mit oder ohne eingebaute statische Mischer mit einem inneren Durchmesser von 5 bis 30 mm, vorzugsweise von 5 bis 15 mm, einer Länge von 0,5 bis 4 m, bevorzugt von 1 bis 2 m und der Durchsatz je Wärmetauscherrohr durch die Rohre 0,5 bis 10 kg/h, bevorzugt 3 bis 7 kg/h, bezogen auf das Polymer und wobei der Druck im Abscheider von 10 kPa bis 0,5 MPa, bevorzugt von 30 kPa bis 0,3 MPa, besonders bevorzugt von 70 kPa bis 0,2 MPa beträgt. Die Heiztemperatur der Rohre beträgt von 240°C bis 360°C, bevorzugt von 250°C bis 340°C und ganz besonders bevorzugt von 260°C bis 300°C. Der Werkstoff für den Rohrbündelwärmetauscher soll gegenüber den Korrosionsangriffen durch Dichlormethan beständig sein und das Polycarbonat nicht schädigen. Bevorzugt wird ein eisenarmer oder eisenfreier Werkstoff eingesetzt. Bevorzugt sind nickelbasierte Werkstoffe mit Eisengehalten kleiner als 4 Gew.%, besonders bevorzugt die Legierungen mit den Werkstoffnummern (lt DIN 17744 oder Stahlschlüssel 2007, Verlag Wegst GmbH): 2.4605 ($NiCr_{23}Mo_{16}Al$) und 2.4610 ($Ni-Mo_{16}Cr_{16}Ti$). Die Polymerkonzentration am Eintritt in den Extruder beträgt zwischen 80 und 99 Gew.%, bevorzugt 90 bis 99 Gew.%.

Der Ausdampfextruder kann ein- oder mehrwellig ausgeführt sein, bevorzugt ein-, zwei- oder vierwellig, ganz besonders bevorzugt zweiwellig. Die Ausführung eines mehrwelligen Ausdampfextruders kann gleich- oder gegenläufig, dicht kämmend oder tangierend sein oder, im Fall von vier oder mehr Wellen, eine Kombination aus dicht kämmend und tangierend. Besonders bevorzugt wird die Ausführung als dicht kämmender, gleichläufiger Doppelschneckenextruder gestaltet.

In einer bevorzugten Ausführungsform können beispielsweise Schneckenelemente für mehrwellige Schneckenmaschinen mit paarweise gleichsinnigen und paarweise exakt abschabenden Schneckenwellen, mit zwei oder mehr Schneckengängen Z, mit Achsabstand A und Außendurchmesser DE, wobei die Summe der Kammwinkel eines Elementepaares größer als 0 und kleiner ist als $2\pi - 4Z\arccos\left(\dfrac{A}{DE}\right)$ eingesetzt werden. Solche Schneckenelemente sind beispielsweise in der zum Anmeldezeitpunkt noch unveröffentlichten deutschen Offenlegungsschrift DE 10 2008 029305.9. Besonders bevorzugt werden derartige Schneckenelemente in den Entgasungszonen eingesetzt.

In einer weiteren bevorzugten Ausführungsform können beispielsweise auch Schneckenelemente mit paarweise gleichsinnigen und paarweise exakt abschabenden Schneckenwellen, wobei erzeugendes und erzeugtes Schneckenprofil eine Abfolge von Abdichtungsbereich - Übergangsbereich - Kanalbereich - Übergangsbereich aufweisen, wobei ein Abdichtungsbereich eine Abfolge von Kammbereich - Flankenbereich - Kammbereich ist, ein Kanalbereich eine Abfolge von Nutbereich - Flankenbereich - Nutbereich ist und ein Übergangsbereich eine Abfolge von Schneckenprofilbereichen ist, die mit einem Flankenbereich anfängt und mit einem Flankenbereich endet eingesetzt werden. Die Bereiche eines Schneckenprofils, die gleich dem Schneckenaußenradius sind, werden als Kammbereiche bezeichnet. Die Bereiche eines Schneckenprofils, die gleich dem Kernradius sind, werden als Nutbereiche bezeichnet. Die Bereiche eines Schneckenprofils, die kleiner als der Schneckenaußenradius und größer als der Kernradius sind, werden als Flankenbereiche bezeichnet. Solche Schneckenelemente sind beispielsweise in der zum Anmeldezeitpunkt noch unveröffentlichten deutschen Offenlegungsschrift DE 10 2008 029306.7. In einem "Kammbereich" haben die Schneckenelemente ihren größten Durchmesser und reinigen die Wand ab. In einem "Nutbereich" haben die Schneckenelemente ihren kleinsten Durchmesser. In einem "Übergangsbereich" haben die Schneckenelemente weder ihren größten noch ihren kleinsten Durchmesser. Besonders bevorzugt weden diese Schneckenelemente zum Druckaufbau am Austritt des Extruders sowie zum Druckaufbau vor den Schleppmitteldispergierzonen eingesetzt.

Die Entgasungszonen können zwei- und dreigängig ausgeführt werden, bevorzugt zweigängig.

Eine hohe Entgasung lässt sich insbesondere erzielen, wenn gemäß einer weiteren besonders bevorzugten Ausführungsform der Extruder in Förderrichtung mehrere Entgasungszonen aufweist, an denen jeweils eine Absaugeinrichtung angeschlossen ist. Sehr gute Ergebnisse wurden mit einem Extruder erzielt, der hinter seiner Einzugsöffnung in Förderrichtung vier bis fünf Entgasungszonen aufweist, wobei an der der ersten Entgasungszone zugeordneten Entgasungsöffnung bevorzugt ein Absolutdruck im Bereich von 50 bis 150 kPa, an der der zweiten Entgasungszone zugeordneten Entgasungsöffnung bevorzugt ein Absolutdruck im Bereich von 0.3 bis 10 kPa, an der dritten und weiteren folgenden Entgasungszonen zugeordneten Entgasungsöffnung bevorzugt ein Absolutdruck im Bereich von 0.1 bis 3 kPa erzeugt wurde, wobei der Druck bevorzugt in jedem Schritt abnimmt. Jede der Entgasungszonen verfügt bevorzugt über einen Entgasungsdom, über den die entstehenden Brüden abgeführt werden. Zwischen den verschiedenen Entgasungszonen des Extruders sind Stauzonen angeordnet, bei denen durch neutrale oder rückfördernde Elemente Druckabfall erzeugt wird, wodurch der freie Querschnitt des Extruders vollständig gefüllt wird. Damit werden unterschiedliche Drücke im Gasraum der Entgasungszonen ermöglicht. Bevorzugt werden Knetelemente oder rückwärts fördernde Schraubenelemente hierfür eingesetzt.

In einer bevorzugten Ausführungsform kann die Entgasung im Ausdampfextruder mit einem die Entgasungsoberfläche vergrößernden Schleppmittel positiv beeinflusst werden. Bei dem erfindungsgemäßen Verfahren wird das Schleppmittel vorzugsweise in Förderrichtung zwischen der vorletzten und letzten Entgasungszone zugemischt. Als Schleppmittel wird vorzugsweise Stickstoff verwendet. Das Schleppmittel wird in einer Knetzone dispergiert. Der zugeführte Schleppmittelvolumenstrom sollte bei einer bevorzugten Wellendrehzahl kleiner oder gleich 390 U/min vorzugsweise 0.05 bis 0,3 Masse-% betragen. Nach der Entgasungszone werden Additive und ggf. ein Strom an plastifiziertem Polymer zugegeben, die in einer Druckaufbauzone mit dem Hauptstrom gemischt werden. Die Schneckenwellen werden in der Entgasungszone bevorzugt zweigängig ausgeführt. Die Druckaufbau- und Mischzone kann ein-, zwei- oder dreigängig ausgeführt werden. Die Endhomogenisierung erfolgt bevorzugt in einem statischen Mischer nach dem Stand der Technik Ein Übersicht über Bauformen statischer Mischer gibt CIT 51 (1979) 5, S. 347-364. Bevorzugt werden statische Mischer vom Typ SMX mit einem Verhältnis von Länge zu Durchmesser von 2 bis 10, besonders bevorzugt von 4 bis 6, eingesetzt.

Die nach dem erfindungsgemäßen Verfahren erhältlichen thermoplastischen Polycarbonate haben einen Restgehalt an flüchtigen Substanzen (Lösungsmittel, insbesondere Monochlorbenzol) von maximal 2000 ppm, bevorzugt von 20 bis 1000 ppm und besonders bevorzugt von 50 bis 600 ppm, bezogen auf die Polymermasse. Der Restgehalt an Dichlormethan beträgt maximal 2 ppm, bevorzugt weniger als 1 ppm und besonders bevorzugt weniger als 0,5 ppm (frei von Dichlormethan).

Für das erfindungsgemäße Verfahren geeignete Diphenole zur Herstellung von Polycarbonat sind im Stand der Technik vielfach beschrieben.

Geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)1-phenyl-propan, 1,1-Bis-(4-hydroxyphenyl)phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)methan, 2,2-Bis-(3,5-dimethyl-4-hydroxyphenyl)propan, Bis-(3,5-dimethyl-4-hydroxyphenyl)sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)3,3,5-trimethylcyclohexan (Bisphenol TMC).

Besonders bevorzugte Diphenole sind 4,4'-Dihydroxydiphenyl, 1,1-Bis-(4-hydroxyphenyl)-phenylethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die zur Regelung des Molekulargewichtes benötigten monofunktionellen Kettenabbrecher, wie beispielsweise Phenol oder Alkylphenole, insbesondere Phenol, p-tert. Butylphenol, isoOctylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw., im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wo kein Phosgen mehr vorliegt, aber der Katalysator noch nicht dosiert wurde. Alternativ können sie auch vor dem Katalysator, mit dem Katalysator zusammen oder parallel zudosiert werden.

In der gleichen Weise werden ggf. Verzweiger oder Verzweigermischungen der Synthese zugesetzt. Üblicherweise werden Verzweiger jedoch vor den Kettenabbrechern zugesetzt. In der Regel werden Trisphenole, Quarterphenole oder Säurechloride von Tri- oder Tetracarbonsäuren oder Gemische der Polyphenole oder der Säurechloride verwendet. Einige der als Verzweiger geeignete Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese von Polycarbonat bevorzugt verwendeten Katalysatoren sind tertiäre Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutylammonium-, Tributylbenzylammonium-, Tetraethylammonium-hydroxid, -chlorid, -bromid, -hydrogensulfat, - tetrafluoroborat, sowie die den Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es werden eine Oniumverbindung oder ein Gemisch aus Oniumverbindungen als Katalysatoren verwendet. In diesem Fall ist eine Zugabe vor der Phosgendosierung bevorzugt. Die Dosierung des Katalysators oder der Katalysatoren kann in Substanz, in einem inerten Lösungsmittel, vorzugsweise dem Lösungsmittel der Polycarbonatsynthese oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt bei 0,001 bis 10 Mol-% bezogen auf Mole eingesetzte Bisphenole, bevorzugt 0,01 bis 8 Mol-%, besonders bevorzugt 0,05 bis 5 Mol-%.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder Kombinationen daraus erfolgen. Dabei ist durch Verwendung der bereits erwähnten Mischorgane sicherzustellen, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Nach Eintrag des Phosgens kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen bei 10 Sekunden bis 60 Minuten, bevorzugt 30 Sekunden bis 40 Minuten, besonders bevorzugt 1 bis 15 Minuten.

Die organische Phase kann aus einem Lösungsmittel oder Mischungen mehrerer Lösungsmittel bestehen. Geeignete Lösungsmittel sind chlorierte Kohlenwasserstoffe (aliphatische und/oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch mit oder zusätzlich zu chlorierten Kohlenwasserstoffen verwendet werden. Eine andere Ausführungsform der Synthese verwendet Lösungsmittel, welche Polycarbonat nicht lösen, sondern nur anquellen. Es können daher auch Nichtlösungsmittel für Polycarbonat in Kombination mit Lösungsmitteln verwendet werden. Dabei können als Lösungsmittel auch in der wässrigen Phase lösliche Lösungsmittel wie Tetrahydrofuran, 1,3/1,4-Dioxan oder 1,3-Dioxolan verwendet werden, wenn der Lösungsmittelpartner die zweite organische Phase bildet.

Das ausreagierte, höchstens noch Spuren (<2 ppm) an Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wässrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z.B. der Chloralkalielektrolyse zugeführt werden kann, während die wässrige Phase gegebenenfalls wieder der Synthese zugeführt wird.

Die organische, das Polycarbonat enthaltende Phase kann nun von allen Kontaminationen alkalischer, ionischer oder katalytischer Art gereinigt werden. Die organische Phase enthält auch nach einem oder mehreren Absetzvorgängen noch Anteile der wässrigen alkalischen Phase in feinen Tröpfchen sowie den Katalysator, in der Regel ein tert. Amin. Die Absetzvorgänge können gegebenenfalls dadurch unterstützt werden, dass die organische Phase Absetzkessel, Rührkessel, Coalescer oder Separatoren bzw. Kombinationen daraus durchläuft, wobei gegebenenfalls Wasser in jedem oder einigen Trennschritten unter Umständen unter Verwendung von aktiven oder passiven Mischorganen zudosiert werden kann.

Nach dieser groben Abtrennung der alkalischen, wässrigen Phase wird die organische Phase ein oder mehrmals mit verdünnten Säuren, Mineral-, Carbon- Hydroxycarbon-und/oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew.-%, bevorzugt 0,01 bis 5 Gew.-% liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen daraus, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können ggf. Säuren, vorzugsweise gelöst im Lösungsmittel, welches der Polymerlösung zugrunde liegt, zugegeben werden. Bevorzugt werden hier Chlorwasserstoffgas und Phosphorsäure oder phosphorige Säure verwendet, die ggf. auch als Mischungen eingesetzt werden können.

Diese gereinigte Lösung wird dann im folgenden Schritt der erfindungsgemäßen Kombination aus Fallrohr-Verdampfer und Ausdampfextruder zugeführt.

Die nach dem erfindungsgemäßen Verfahren erhaltenen Polycarbonate können zur Veränderung von Eigenschaften mit den üblichen Additiven und Zusatzstoffen (z.B. Hilfs- und Verstärkungsstoffe) versehen werden. Der Zusatz von Additiven und Zuschlagsstoffen dient der Verlängerung der Nutzungsdauer (z.B. Hydrolyse- oder Abbaustabilisatoren), der Verbesserung der Farbstabilität (z.B. Thermo- und UV-Stabilisatoren), der Vereinfachung der Verarbeitung (z.B. Entformer, Fließhilfsmittel), der Verbesserung der Gebrauchseigenschaften (z.B. Antistatika), der Verbesserung des Flammschutzes, der Beeinflussung des optischen Eindrucks (z.B. organische Farbmittel, Pigmente) oder der Anpassung der Polymereigenschaften an bestimmte Belastungen (Schlagzähmodifikatoren, fein zerteilte Mineralien, Faserstoffe, Quarzmehl, Glas- und Kohlenstofffasern).

Die Additive und Zuschlagstoffe werden bevorzugt in flüssiger Form oder als Schmelze zugegeben. Schlagzähmodifikatoren werden bevorzugt in einem Seitenexpruder plastifiziert und anschließend als Schmelze zugegeben. Pigmente, Mineralien, Faserstoffe und andere Zuschlagstoffe, die keinen oder einen sehr hohen Schmelzpunkt aufweisen, werden bevorzugt in einem Seitenextruder mit plastifiziertem Polycarbonat gemischt und als Suspension bzw. gefüllte Schmelze zugegeben.

Nachfolgend wird die Erfindung anhand zweier Ausführungsbeispiele darstellenden Figuren näher erläutert, sind aber nicht als Beschränkung aufzufassen.

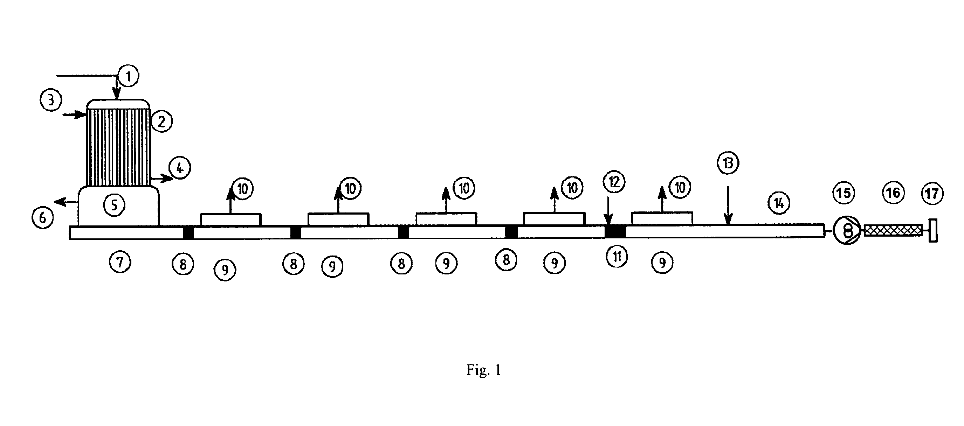

Gemäß Fig.1 wird die Polymerlösung durch eine Zuführung 1 dem nach unten offenen Rohrbündelwärmetauscher 2 zugeführt. Der Rohlrbündelwärmetauscher wird mit Heizmedium beheizt, das bei 3 zu- und bei 4 abgeführt wird. Am Ende der Rohre entspannt die Polymerlösung in den ersten Entgasungsdom 5 des Extruders, der direkt über dem Extruder angeordnet ist, und der als Abscheidebehälter zur Abtrennung der Polymerphase von der Gasphase dient. Das freigesetzte Gas wird über die Brüdenleitung 6 abgeführt. Das Produkt fällt direkt in die Einzugszone 7 des Extruders und wird durch eine Abdichtungszone 8 der ersten Entgasungszone 9 zugeführt, die über einen Entgasungsdom 10 verfügt. Danach folgen weitere Stauzonen 8 und Entgasungszonen 9. Vor dem letzten Entgasungsdom wird in der Knetzone 11 über die Zugabestelle 12 Stickstoff zugegeben. Bei der Zugabestelle 13 werden noch Additive und ggf. plastifiziertes Polymer zugegeben, die in der Druckaufbau- und Mischzone 14 mit dem Polymerstrom vermischt werden. Der Extruder beschickt eine nachgeschaltete Zahnradpumpe 15, die den erforderlichen Druck zur Durchströmung des statischen Mischers 16 und des Strangspritzkopfes 17 aufbaut.

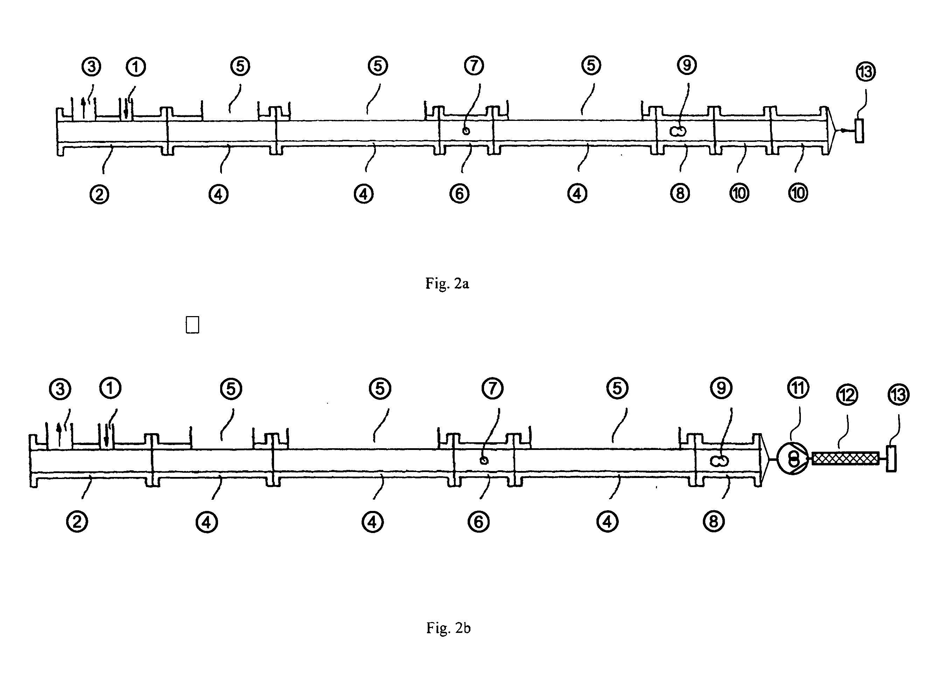

Fig. 2a zeigt einen Entgasungsextruder nach dem Stand der Technik, wie er in EP 1 165 302 beschrieben ist. Durch eine Zuführung 1 wird dem Ausdampfextruder die Polymerlösung zugeführt. Über die Entgasungsöffnungen der Rückwärtsentgasung (3) und der drei Vorwärtsentgasungsöffnungen (5) werden die Brüden mittels Absaugeinrichtungen abgezogen. Das vierte Gehäuseteil (6) ist mit einem Anschluss (7) versehen, über den ein Schleppmittel, vorzugsweise Stickstoff zugegeben werden kann. Über den Seitenextruder (9) werden Additive und Zuschlagstoffe und ggf. plastifiziertes Polymer zugegeben. In den Druckaufbaugehäusen (10) erfolgt die Homogenisierung der Mischung und der Aufbau des für die Extrusion durch Sieb und Düsenplatte (13) erforderlichen Druckes.

Fig. 2b zeigt einen erfindungsgemäßen Entgasungsextruder. Der Aufbau ist von der Zufuhr der Polymerlösung (1) bis zur Zufuhr von Additiven und Zuschlagstoffen (9) identisch mit Fig. 2a. Die Homogenisierung der Mischung erfolgt jedoch im Statischen Mischer (12) und der Druck zur Extrusion durch Sieb und Düsenplatte (13) sowie zum Überfahren des Statischen Mischers (12) wird durch die Zahnradpumpe (11) aufgebracht. Der Entgasungsextruder konnte um die beiden Druckaufbaugehäuse ((10) in Fig. 2a) verkürzt werden.

Die folgenden Beispiele dienen der exemplarischen Erläuterung der Erfindung und sind nicht als Beschränkung aufzufassen.

**Vergleichsbeispiel**

6,75 t/h Polycarbonat wurden in einem Extruder nach Fig. 2a mit Rückwärtsentgasung aus einer Lösung von 92,2 Gew-% Polycarbonat, 7,7 Gew-% Chlorbenzol und 0,1, Gew-% Methylenchlorid isoliert. Der verwendete Ausdampfextruder war als dicht kämmender, gleichsinnig drehender Doppelschneckenextruder ausgeführt und hatte einen Schneckendurchmesser von 178 mm, ein Verhältnis von Länge des Extruders zum Durchmesser von 48 und war in der Einzugszone und den Entgasungszonen zweigängig ausgeführt. In einer Schleppmittelzone wurden 1,3 kg/h Stickstoff zugeführt. Das isolierte Polycarbonat hatte eine relative Viskosität von 1,295. Die relative Viskosität ist das Verhältnis einer Lösung von 0,5 g Polycarbonat in 100 ml Dichlormethan zur Viskosität des reinen Lösungsmittels bei 25°C. Der Extrusionsdruck betrug 60 bar.

Der Chlorbenzol-Restgehalt im isolierten Polycarbonat betrug 230 ppm und der Gehalt an Dichlormethan 0,5 ppm. Die maximale Temperatur, an der Düse des Extruders, betrug 408°C. Der Yellowness-Index des Polycarbonats betrug 2,1.

**Beispiel**

6,75 t/h Polycarbonat wurden in einem erfindungsgemäßen Extruder nach Fig. 2b aus einer Lösung von 92,2 Gew-% Polycarbonat, 7,7 Gew-% Chlorbenzol und 0,1 Gew-% Methylenchlorid isoliert. Der verwendete Ausdampfextruder war als dicht kämmender, gleichsinnig drehender Doppelschneckenextruder ausgeführt und hatte einen Schneckendurchmesser von 178 mm. Dem Extruder wurde erfindungsgemäß ein Statischer Mischer vom Typ SMX (Fa. Sulzer Chemtech) mit einem Nenndurchmesser von 100 mm und einer Länge von 400 mm nachgeschaltet. Zum Druckaufbau wurde zwischen Extruder und Statikmischer eine Zahnradpumpe vom Typ Therminox 180 der Fa. Maag Textron geschaltet. Der Extruder war bis zum Ende der Entgasungszone identisch zum Vergleichsbeispiel aufgebaut. Gegenüber dem Vergleichsbeispiel war der Extruder jedoch um die beiden Druckaufbaugehäuse (10) in Fig. 2a verkürzt, so dass das Verhältnis von Länge des Extruders zum Durchmesser 44 betrug. Der Extruder war in der Einzugszone und den Entgasungszonen zweigängig ausgeführt. In der Schleppmittelzone wurden, ebenso wie im Vergleichseispiel, 1,3 kg/h Stickstoff zugeführt. Das isolierte Polycarbonat hatte eine relative Viskosität von 1,295. Die Temperatur der zugeführten Polymerlösung von der Rückwärtsentgasung betrug 195°C. Der Extrusionsdruck betrug 60 bar und der zusätzliche Druck zur Überwindung des Statischen Mischers betrug 10 bar. Die Drehzahl der Zahnradpumpe wurde so geregelt, dass auf Ihrer Saugseite ein konstanter Druck von 10 bar herrschte.

Der Chlorbenzol-Restgehalt im isolierten Polycarbonat betrug 230 ppm und der Gehalt an Dichlormethan betrug 0,5 ppm. Die Temperatur an der Düse betrug 399°C. Der Yellowness-Index des Polycarbonats betrug 1,6.

**Patentansprüche**

1. Vorrichtung zum Entgasen und Mischen von Polymerschmelzen mit Additiven in flüssiger Form, in Lösung oder in Dispersion, **dadurch gekennzeichnet, dass** einem AusdampfExtruder ein Statikmischer nachgeschaltet wird.

2. Vorrichtung nach Anspruch 1, **dadurch gekennzeichnet, dass** desweiteren zwischen Extruder und Statikmischer eine Zahnradpumpe geschaltet wird.

3. Vorrichtung nach Anspruch 1 oder 2, **dadurch ge-** **kennzeichnet, dass** vor dem Ausdampfextruder ein Fallrohrverdampfer angeordnet ist.

4. Vorrichtung nach Anspruch 3, **dadurch gekennzeichnet, dass** der Fallrohrverdampfer direkt über dem Extruder angeordnet ist.

5. Vorrichtung nach einem der voranstehenden Ansprüche, **dadurch gekennzeichnet, dass** der Fallrohrverdampfer aus einem Rohrbündel-Wärmetauscher mit einer Vielzahl von Rohren, die von außen beheizt werden, besteht.

6. Vorrichtung nach einem der voranstehenden Ansprüche, **dadurch gekennzeichnet, dass** der Kombination aus einem Fallrohrverdampfer und Ausdampfextruder wenigstens ein weiterer Fallrohrverdampfer vorangestellt ist.

7. Vorrichtung nach einem der voranstehenden Ansprüche, **dadurch gekennzeichnet, dass** der Ausdampfextruder zwei- oder vierwellig ausgeführt ist.

8. Vorrichtung nach einem der voranstehenden Ansprüche, **dadurch gekennzeichnet, dass** der Ausdampfextruder ein dicht kämmender, gleichsinnig drehender Doppelschneckenextruder ist.

9. Vorrichtung nach einem der voranstehenden Ansprüche, **dadurch gekennzeichnet, dass** der Extruder in Förderrichtung mehrere Entgasungszonen aufweist.

10. Verfahren nach einem der Ansprüche 1 bis 9, **dadurch gekennzeichnet, dass** eine Polycarbonatschmelze, enthaltend wenigstens ein organisches Lösemittel und wenigstens ein Polycarbonat, der Vorrichtung zur Entfernung der flüchtigen Bestandteile zugeführt wird.

11. Verfahren nach Anspruch 10, **dadurch gekennzeichnet, dass** eine Eindüsung und Vermischung von Inertgasen als Schleppmittel in den Polymerschmelzestrom vor dem Fallrohrverdampfer erfolgt.

12. Verfahren nach Anspruch 10 oder 11, **dadurch gekennzeichnet, dass** eine Eindüsung von Inertgas als Schleppmittel an einem oder mehreren Gehäusen des Ausdampfextruders erfolgt.

13. Verfahren nach einem der Ansprüche 10 bis 12, **dadurch gekennzeichnet, dass** Additive, Zuschlagstoffe, polymere Bestandteile und / oder Farbmittel in der Extrusionszone des Ausdampf-Extruders zugegeben werden

14. Verfahren nach einem der Ansprüche 10 bis 13, **dadurch gekennzeichnet, dass** die Eingangskonzentration des Polycarbonats in den Fallrohrverdampfer zwischen 60 Gew-% und 95 Gew-% beträgt.

15. Verfahren nach einem der Ansprüche 10 bis 14, **dadurch gekennzeichnet, dass** die erhaltenen Polycarbonate einen Restgehalt an Lösungsmittel von 20 ppm bis 1000 ppm enthalten.

Fig. 1

Fig. 2a

Fig. 2b

Europäisches
Patentamt

European
Patent Office

Office européen
des brevets

# EUROPÄISCHER RECHERCHENBERICHT

**Nummer der Anmeldung**

EP 09 00 7266

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 103 56 821 A1 (BAYER MATERIALSCIENCE AG [DE]) 7. Juli 2005 (2005-07-07)<br>* Seite 2, Absatz 0004 - Absatz 0006 *<br>* Seite 3, Absatz 0014 - Absatz 0016 *<br>* Seite 4, Absatz 0019 - Seite 5, Absatz 0042 *<br>* Beispiel 1 *<br>* Ansprüche 1-7 *<br>----- | 1,7,8, 10,13 | INV.<br>B29C47/76<br>B29C47/36<br>B29B7/84<br><br>ADD.<br>B29C47/50<br>B01D1/06 |
| X<br><br>Y | EP 1 719 600 A2 (COPERION WERNER & PFLEIDERER [DE])<br>8. November 2006 (2006-11-08)<br>* Zusammenfassung *<br>* Spalte 1, Zeilen 6-55 *<br>* Spalte 2, Zeilen 13-54 *<br>* Spalte 2, Zeile 55 - Spalte 3, Zeile 48 *<br>* Ansprüche 1,2,4,5,7, *<br>* Abbildung 1 *<br>----- | 1,2, 7-10,12, 13<br>3-6 | |
| X | WO 91/16189 A1 (EXXON CHEMICAL PATENTS INC [US]) 31. Oktober 1991 (1991-10-31)<br>* Zusammenfassung *<br>* Seite 4, Zeilen 26-37 *<br>* Seite 11, Zeile 9 - Seite 16, Zeile 37 *<br>* Comparative Example 1; Seite 19 *<br>* Ansprüche 1,7,8,14,36,42 *<br>* Beispiel 1 *<br>* Abbildung 1 *<br>----- | 1,7-9 | **RECHERCHIERTE SACHGEBIETE (IPC)**<br><br>B29C<br>B29B<br>B01D |
| X<br>Y | DE 93 00 545 U1 (REKUMA SYSTEMS AG ZÜRICH, CH) 11. März 1993 (1993-03-11)<br>* Abbildung 1 *<br>-----<br>-/-- | 1<br><br>3-6 | |

Der vorliegende Recherchenbericht wurde für alle Patentansprüche erstellt

| Recherchenort | Abschlußdatum der Recherche | Prüfer |
|---|---|---|
| München | 16. Juni 2010 | Ngwa, Walters |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................

& : Mitglied der gleichen Patentfamilie, übereinstimmendes Dokument

EPO FORM 1503 03.82 (P04C03)

**EUROPÄISCHER RECHERCHENBERICHT**

Nummer der Anmeldung

EP 09 00 7266

Europäisches
Patentamt

European
Patent Office

Office européen
des brevets

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 100 16 894 A1 (BAYER AG [DE]) 18. Oktober 2001 (2001-10-18) | 10,11 | |
| Y | * Seite 2, Zeile 23 - Seite 3, Zeile 14 * <br> * Seite 4, Zeilen 5-14 * <br> * Seite 5, Zeile 6 - Seite 7, Zeile 31 * <br> * Seite 9, Zeile 5 - Seite 11, Zeile 20 * <br> * Ansprüche 1-12 * <br> * Abbildungen 1-3 * <br> ----- | 3-6 | |
| X | WO 2005/103114 A1 (BAYER MATERIALSCIENCE AG [DE]; KIRCHHOFF JOERG [DE]; KOENIG THOMAS [DE] 3. November 2005 (2005-11-03) | 10,11, 14,15 | |
| Y | * Zusammenfassung * <br> * Seite 2, Zeile 4 - Seite 7, Zeile 13 * <br> * Seite 18, Zeile 1 - Seite 20, Zeile 31 * <br> * Tabelle 1 * <br> * Ansprüche 1-8 * <br> * Abbildungen 1-2 * <br> ----- | 3-6 | |
| Y | JP 5 017516 A (MITSUBISHI RAYON CO) 26. Januar 1993 (1993-01-26) <br> * Zusammenfassung * <br> * Abbildung 1 * <br> ----- | 3-5 | RECHERCHIERTE SACHGEBIETE (IPC) |
| A | EP 0 027 700 A2 (MITSUI PETROCHEMICAL IND [JP]) 29. April 1981 (1981-04-29) <br> * Zusammenfassung * <br> * Beispiel 1 * <br> * Ansprüche 1-7 * <br> * Abbildung 1 * <br> ----- | 1-15 | |

Der vorliegende Recherchenbericht wurde für alle Patentansprüche erstellt

| Recherchenort | Abschlußdatum der Recherche | Prüfer |
|---|---|---|
| München | 16. Juni 2010 | Ngwa, Walters |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................................

& : Mitglied der gleichen Patentfamilie, übereinstimmendes Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

    Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 09 00 7266

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1, 2, 7-10, 12, 13

   Vorrichtung/Verfahren zum Entgasen und Mischen von Polymerschmelzen mit Additiven, wobei eine Zahnradpumpe zwischen dem Ausdampf-Extruder und dem Statikmischer eingesetzt ist.
   ---

2. Ansprüche: 3-6, 11, 14, 15

   Vorrichtung/Verfahren zur Gewinnung von Polymerschmelzen aus organischen Phasen, wobei die Isolierung durch eine Aufkonzentrierung von Polymerlösungen in einem Fallrohrverdampfer erfolgt.
   ---

**ANHANG ZUM EUROPÄISCHEN RECHERCHENBERICHT
ÜBER DIE EUROPÄISCHE PATENTANMELDUNG NR.**   EP 09 00 7266

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-06-2010

| Im Recherchenbericht angeführtes Patentdokument | Datum der Veröffentlichung | Mitglied(er) der Patentfamilie | Datum der Veröffentlichung |
|---|---|---|---|
| DE 10356821 A1 | 07-07-2005 | CN 1890297 A | 03-01-2007 |
| | | EP 1692212 A1 | 23-08-2006 |
| | | WO 2005054343 A1 | 16-06-2005 |
| | | JP 2007513227 T | 24-05-2007 |
| | | KR 20060121130 A | 28-11-2006 |
| | | US 2005121817 A1 | 09-06-2005 |
| EP 1719600 A2 | 08-11-2006 | DE 102005020794 A1 | 09-11-2006 |
| WO 9116189 A1 | 31-10-1991 | AU 7746991 A | 11-11-1991 |
| DE 9300545 U1 | 11-03-1993 | KEINE | |
| DE 10016894 A1 | 18-10-2001 | AU 6380201 A | 23-10-2001 |
| | | BR 0107545 A | 14-01-2003 |
| | | CA 2404774 A1 | 02-10-2002 |
| | | CN 1420895 A | 28-05-2003 |
| | | WO 0177188 A1 | 18-10-2001 |
| | | EP 1274741 A1 | 15-01-2003 |
| | | JP 2003530468 T | 14-10-2003 |
| | | MX PA02009851 A | 27-05-2003 |
| | | TW 553964 B | 21-09-2003 |
| | | US 2003176636 A1 | 18-09-2003 |
| WO 2005103114 A1 | 03-11-2005 | CN 1997687 A | 11-07-2007 |
| | | DE 102004019294 A1 | 17-11-2005 |
| | | EP 1740638 A1 | 10-01-2007 |
| | | JP 2007533804 T | 22-11-2007 |
| | | KR 20070012418 A | 25-01-2007 |
| | | US 2005239996 A1 | 27-10-2005 |
| JP 5017516 A | 26-01-1993 | KEINE | |
| EP 0027700 A2 | 29-04-1981 | CA 1180845 A1 | 08-01-1985 |
| | | DE 3066299 D1 | 01-03-1984 |
| | | JP 1608101 C | 13-06-1991 |
| | | JP 56053104 A | 12-05-1981 |
| | | JP 63000442 B | 07-01-1988 |
| | | US 4906329 A | 06-03-1990 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1165302 A
- DE 10356821
- EP 1265944 A
- EP 1113848 A
- DE 2908352
- EP 027700 A
- JP 05017516 B
- EP 1510530 A
- DE 2532355
- DE 102008029305
- DE 102008029306

**In der Beschreibung aufgeführte Nicht-Patentliteratur**

- Chemistry and Physics of Polycarbonates. **Schnell.** Polymer Reviews. Interscience Publishers, 1964, vol. 9, 33-70
- **Klemens Kohlgrüber.** Der gleichläufige Doppelschneckenextruder. Carl Hanser Verlag, 193-195
- **Klemens Kohlgrüber.** Der gleichläufige Doppelschneckenextruder. Carl Hanser Verlag, 242ff
- *CIT,* 1979, vol. 51 (5), 347-364